# DEMANDE DE BREVET EUROPEEN

(11) **EP 3 598 595 A1**
(43) Date de publication de la demande: **22.01.2020**
(21) Numéro de dépôt: 19180741.1
(22) Date de dépôt: 18.06.2019
(51) Int. Cl.: H02G 11/02, B65H 75/38, B65H 75/44, H01R 41/00

(54) **DISPOSITIF MOTORISÉ D ENROULEMENT / DÉROULEMENT DE CÂBLE ÉLECTRIQUE**

(30) Priorité: 20.07.2018 FR 1856754
(71) Demandeur: PSA Automobiles SA, 78300 Poissy (FR)
(72) Inventeur: MOREAU, LIONEL, 78360 MONTESSON (FR)

(57) **Abrégé**

Le dispositif motorisé d'enroulement / déroulement de câble électrique (CE) comprend un arbre fixe (1) de fixation à un bâti vertical (BAT), un arbre tournant (2) monté en rotation sur l'arbre fixe (1) et couplé mécaniquement à un moteur électrique (5), un récepteur d'enroulement de câble électrique (3) monté sur l'arbre tournant et entraîné en rotation avec celui-ci, l'arbre fixe, l'arbre tournant et le récepteur d'enroulement de câble électrique ayant un axe central commun (Aₓ) disposé horizontalement lorsque l'arbre fixe est fixé sur le bâti, des moyens d'entraînement en translation du récepteur suivant l'axe central commun conjointement à la rotation du récepteur, et des moyens de connexion électrique (8, 9) agencés de façon à assurer la continuité de liaisons électriques de puissance entre un câble d'alimentation électrique (CA) et le câble électrique (CE) pendant un mouvement combiné de rotation et translation du récepteur.

## Description

L'invention concerne de manière générale le domaine de l'enroulement / déroulement des câbles électriques. Plus particulièrement, l'invention se rapporte à un dispositif motorisé d'enroulement / déroulement de câble électrique, notamment, pour un système automatique de recharge électrique par induction des batteries des véhicules électriques et hybrides.

La recharge des batteries des véhicules électriques et hybrides avec des systèmes de recharge sans contact présente un intérêt certain. La recharge électrique d'un véhicule à une station de recharge électrique est une tâche fastidieuse pour l'utilisateur. L'utilisateur doit se garer à proximité immédiate de la station de recharge et raccorder le véhicule à celle-ci au moyen d'un câble de connexion électrique. L'emboitement de prises électriques mâle et femelle et le déroulement / enroulement du câble électrique de connexion doivent être gérés manuellement par l'utilisateur.

Les systèmes de recharge électrique par induction électromagnétique, qui autorisent un transfert d'énergie électrique sans contact, sont appelés à se développer pour la recharge des véhicules électriques et hybrides. Ces systèmes ne requièrent plus d'emboitement de prises et, s'ils sont équipés d'une bobine primaire mobile de recharge, peuvent apporter une certaine flexibilité pour l'emplacement du stationnement de recharge du véhicule. Cette flexibilité est toutefois limitée par la longueur du câble électrique qui relie la bobine primaire mobile de recharge à la station de recharge fixe. La réalisation d'un système automatique de recharge électrique par induction avec bobine primaire mobile demande la disponibilité un dispositif motorisé capable de gérer efficacement les opérations d'enroulement / déroulement du câble électrique, en particulier lorsque ce câble est de grande longueur pour davantage de flexibilité dans le stationnement de recharge du véhicule.

Par WO2012059989A1, il est connu un enrouleur de câble électrique comprenant une bobine de câble sur laquelle est enroulé le câble. La bobine de câble est montée rotative sur un axe vertical. Un moteur électrique est prévu pour la rotation de la bobine de câble. Le moteur électrique délivre un couple qui est fonction de vitesse de rotation de la bobine de câble et qui est appliqué dans le sens de la rotation de la bobine de câble. Dans cet enrouleur de la technique antérieure, lors des opérations d'enroulement / déroulement, le câble électrique frotte sur le flasque inférieur de la bobine qui est disposée verticalement. Ce frottement du câble électrique non seulement affecte la durée de vie du câble par une usure prématurée liée à l'échauffement et l'arrachement des matériaux, mais peut aussi conduire à un risque sécuritaire par une altération possible de la gaine d'isolation électrique. L'enroulement du câble électrique est fait sur plusieurs couches et engendre une courbure variable qui accroît les contraintes de conception. Par ailleurs, le guidage et l'alignement du câble électrique lors des opérations d'enroulement / déroulement ne sont pas gérés, ce qui induit des contraintes sur un dispositif desservi par cet enrouleur de câble électrique.

Il existe donc un besoin pour un dispositif motorisé d'enroulement / déroulement de câble électrique n'ayant pas les inconvénients susmentionnés et qui minimise notamment les contraintes de frottement, de courbure et de torsion du câble électrique.

Selon un premier aspect, l'invention concerne un dispositif motorisé d'enroulement / déroulement d'un câble électrique comprenant un arbre fixe de fixation à un bâti vertical, un arbre tournant monté en rotation sur l'arbre fixe et couplé mécaniquement à un moteur électrique, un récepteur d'enroulement de câble électrique monté sur l'arbre tournant et entraîné en rotation avec celui-ci, l'arbre fixe, l'arbre tournant et le récepteur d'enroulement de câble électrique ayant un axe central commun disposé horizontalement lorsque l'arbre fixe est fixé sur le bâti vertical, des moyens d'entraînement en translation du récepteur d'enroulement de câble électrique suivant l'axe central commun conjointement à la rotation du récepteur d'enroulement de câble électrique, et des moyens de connexion électrique agencés de façon à assurer la continuité de liaisons électriques de puissance entre un câble d'alimentation électrique et le câble électrique pendant un mouvement combiné de rotation et translation du récepteur d'enroulement de câble électrique. Ce dispositif est tel que les moyens de connexion électrique comprennent un collecteur rotatif électrique assurant la continuité de liaisons électriques de puissance relativement à la rotation de l'arbre tournant et du récepteur d'enroulement de câble autour de l'axe central, et au moins un ensemble de rail / frotteur électrique assurant la continuité de liaisons électriques de puissance relativement à la translation selon l'axe central du récepteur d'enroulement de câble

Selon une autre caractéristique particulière, le dispositif comprend plusieurs ensembles de rail / frotteur électrique qui sont disposés régulièrement en cercle autour de l'axe central commun.

Selon encore une autre caractéristique particulière, le collecteur rotatif électrique comporte une pièce porte-pistes et une pièce porte-balais, la pièce porte-pistes étant fixée à l'arbre fixe et ayant une pluralité de pistes de conduction électrique et la pièce porte-balais étant fixée à l'arbre tournant et ayant une pluralité de balais de conduction électrique en contact électrique permanent avec la pluralité de pistes de conduction électrique.

Selon encore une autre caractéristique particulière, les pistes de conduction électrique sont en bronze.

Selon encore une autre caractéristique particulière, chaque ensemble de rail / frotteur électrique comporte un rail de conduction électrique fixé sur l'arbre tournant et se prolongeant parallèlement à l'axe central commun et un frotteur électrique fixé au récepteur d'enroulement de câble et en contact électrique permanent avec le rail de conduction électrique.

Selon encore une autre caractéristique particulière, le rail de conduction électrique est en bronze.

Selon encore une autre caractéristique particulière, les moyens de connexion électrique sont de type monophasé ou triphasé.

L'invention concerne aussi un système automatique de recharge électrique par induction électromagnétique ayant une bobine primaire mobile, comprenant un dispositif tel qu'indiqué ci-dessus pour l'enroulement / déroulement d'un câble électrique alimentant le système.

D'autres avantages et caractéristiques de la présente invention apparaîtront plus clairement à la lecture de la description détaillée ci-dessous d'une forme de réalisation particulière de l'invention en référence aux dessins annexés, dans lesquels :
- la Fig.1 est une vue en perspective montrant une forme de réalisation particulière d'un dispositif motorisé selon l'invention pour l'enroulement / déroulement d'un câble électrique ;
- les Figs.2A et 2B sont des vues en demi-coupe longitudinale du dispositif motorisé d'enroulement / déroulement de câble électrique de la Fig.1, montrant le dispositif dans des états « câble enroulé » et « câble enroulé » ;
- la Fig.3 est une vue en perspective d'un collecteur rotatif électrique inclus dans le dispositif motorisé d'enroulement / déroulement de câble électrique de la Fig.1 ;
- la Fig.4 est une vue plane du collecteur rotatif électrique de la Fig.3 ;
- la Fig.5 est une vue plane montrant l'implantation d'ensembles de rail / frotteur électrique inclus dans le dispositif motorisé d'enroulement / déroulement de câble électrique de la Fig.1 ; et
- les Figs.6 et 7 sont des vues partielles en perspective d'un des ensembles de rail / frotteur électrique inclus dans le dispositif motorisé d'enroulement / déroulement de câble électrique de la Fig.1.

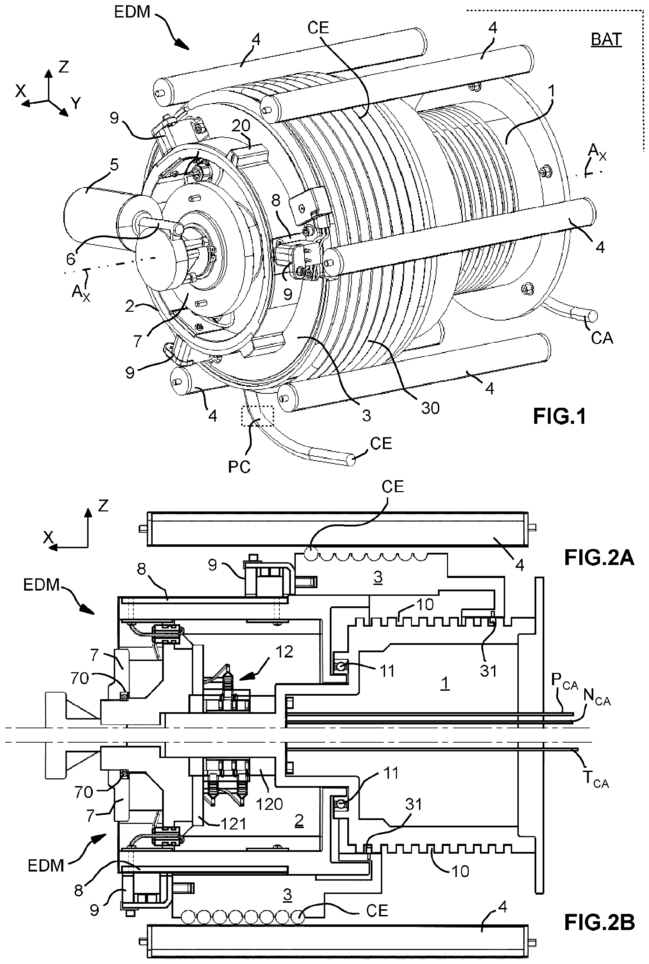

En référence aux Figs.1, 2A, 2B, et 3 à 7, il est maintenant décrit une forme de réalisation particulière EDM d'un dispositif motorisé d'enroulement / déroulement de câble électrique selon l'invention. Le dispositif EDM est décrit ici dans un contexte d'utilisation avec un système de recharge par induction à bobine primaire mobile pour les batteries des véhicules électriques et hybrides.

Comme bien visible à la Fig.1, le dispositif EDM selon l'invention est conçu pour être fixé en position horizontale sur un bâti vertical BAT. Le dispositif EDM comprend notamment un arbre fixe 1, un arbre tournant 2, un récepteur d'enroulement de câble 3, et une pluralité de rouleaux cylindriques de maintien 4. L'arbre fixe 1, l'arbre tournant 2 et le récepteur d'enroulement de câble 3 sont des pièces comprises dans des enveloppes cylindriques et ayant un axe central commun Ax. L'axe central commun Ax est horizontal et correspond à l'axe X d'un repère spatial orthogonal XYZ montré à la Fig.1.

L'arbre fixe 1 est fixé solidairement sur le bâti BAT, ainsi que les rouleaux de maintien 4. Dans cette forme de réalisation particulière, le nombre des rouleaux de maintien 4 est de six.

L'arbre tournant 2 et le récepteur d'enroulement de câble 3 sont liés en rotation et forment un ensemble mobile. Cet ensemble mobile est entrainé en rotation réversible autour de l'axe A_{X} par un moteur électrique 5, un sens de rotation correspondant à l'enroulement du câble électrique CE et l'autre sens de rotation correspondant au déroulement de celui-ci. Typiquement, le moteur électrique 5 est un moteur de type pas-à-pas, mais pas exclusivement. Le moteur électrique 5 est couplé mécanique à l'arbre tournant 2 par un engrenage 6.

Le récepteur d'enroulement de câble 3 comporte un alésage intérieur dans lequel est contenu l'arbre tournant 2. Le récepteur d'enroulement de câble 3 peut coulisser sur l'arbre tournant 2. Par contre, la rotation du récepteur d'enroulement de câble 3 autour de l'arbre tournant 2 est interdite par des murets de guidage axiaux 20 de l'arbre tournant 2 qui sont insérés dans des rainures axiales correspondantes présentes dans l'alésage intérieur du récepteur d'enroulement de câble 3.

Le récepteur d'enroulement de câble 3 comprend sur son pourtour extérieur une gouttière hélicoïdale 30 qui forme un logement pour le câble électrique CE. L'enroulement du câble électrique CE dans le récepteur d'enroulement de câble 3 est effectué sur une seule couche d'enroulement. La gouttière hélicoïdale 30 détermine précisément la position occupée par le câble électrique CE dans le récepteur d'enroulement de câble 3. Les six rouleaux de maintien 4 sont répartis tout autour du récepteur d'enroulement de câble 3, avec un décalage angulaire de 60° entre rouleaux, et garantissent le maintien en position du câble électrique CE dans la gouttière 30.

Conformément à l'invention, lors de sa rotation conjointement avec l'arbre tournant 2, le récepteur d'enroulement de câble 3 effectue également une translation selon l'axe X qui accompagne le défilement du câble électrique CE pendant son enroulement ou déroulement.

Dans la présente forme de réalisation, l'opération d'enroulement du câble électrique CE dans le récepteur 3 demande une rotation de l'ensemble mobile dans le sens horaire et une translation en +X du récepteur 3. L'opération de déroulement du câble électrique CE demande elle une rotation de l'ensemble mobile dans le sens anti-horaire et une translation en -X du récepteur 3. A la Fig.1, le dispositif EDM est montré dans un état dans lequel le câble électrique CE est déroulé en quasi-totalité.

Des moyens de connexion électrique, qui sont détaillés plus bas en référence plus particulièrement aux Figs.2A, 2B, et 3 à 7, sont prévus pour assurer la continuité des liaisons électriques de puissance entre un câble d'alimentation électrique CA, du réseau électrique, et le câble électrique CE qui alimente la bobine primaire mobile du système de recharge par induction. Ces moyens de connexion électrique comprennent un collecteur rotatif électrique (non visible à la Fig.1) et plusieurs ensembles de rail / frotteur électrique (repères 8 et 9 à la Fig.1) qui garantissent des liaisons électriques de puissance permanentes et fiables entre les câbles CA et CE pendant le mouvement combiné de rotation et translation du récepteur 3.

Dans cette forme de réalisation particulière, le dispositif EDM est de type monophasé et les câbles CE et CA comprennent trois fils électriques, à savoir, un fil de phase, un fil de neutre et un fil de terre. Les moyens de connexion électrique mentionnés ci-dessus sont conçus et dimensionnés pour supporter la tension du réseau d'alimentation électrique et le passage d'un courant électrique d'au moins 50 A.

Dans d'autres formes de réalisation destinées à l'alimentation électrique, le dispositif EDM pourra être de type triphasé et les câbles CE et CA comprendront alors quatre fils électriques, à savoir, trois fils de phase et un fil de terre.

On notera que le mouvement combiné du récepteur 3 permet d'obtenir un point de passage de câble PC qui reste fixe quel que soit l'état d'enroulement / déroulement du câble électrique CE. Cette caractéristique autorise un alignement aisé du dispositif EDM avec le système de recharge par induction à bobine primaire mobile, sans contraintes de surchauffe, de courbure, de torsion du câble sur lui-même et de frottement du câble. De manière générale, on notera que le dispositif EDM de l'invention autorise une optimisation des opérations d'enroulement / déroulement aussi bien pour un câble électrique de petit diamètre, souple et flexible et ayant un faible rayon de courbure, que pour un câble électrique de très gros diamètre, moins souple et moins flexible et ayant un rayon de courbure très important. Par ailleurs, le poids du câble est uniformément réparti dans le récepteur d'enroulement de câble, ce qui limite la fatigue et l'usure des pièces en rotation.

Dans le système de recharge par induction à bobine primaire mobile, le dispositif EDM selon l'invention peut être piloté de façon à ce que le câble électrique reste tendu au-dessus du sol pendant toutes les phases de déplacement de la bobine primaire mobile. Le pilotage du dispositif EDM selon l'invention est alors effectué de manière synchronisée avec le déplacement de la bobine primaire mobile. Un tel pilotage du dispositif EDM selon l'invention évite un frottement du câble électrique sur le sol pendant les phases de déplacement de la bobine primaire mobile.

Les Figs.2A et 2B montrent des demi-coupes haute et basse du dispositif EDM selon l'invention, respectivement dans un état « câble déroulé » et un état « câble enroulé ».

Comme visible aux Figs.2A et 2B, l'arbre fixe 1 comporte une rainure hélicoïdale 10 dans laquelle sont logés des galets de came 31 du récepteur d'enroulement de câble 3. Dans cette forme de réalisation particulière, les galets de came 31 sont au nombre de trois et sont répartis angulairement avec un décalage angulaire de 120° entre galets. L'entrainement en rotation du récepteur d'enroulement de câble 3 par l'arbre tournant 2 provoque ainsi la translation du récepteur d'enroulement de câble 3 suivant l'axe X.

L'arbre fixe 1 supporte le montage en rotation de l'ensemble mobile. L'arbre tournant 2 est emmanché dans l'arbre fixe 1. La rotation de l'arbre tournant 2 sur l'arbre fixe 1 est guidée à l'aide d'un premier roulement à billes 11 et d'un deuxième roulement à billes 70. Le premier roulement à billes 11 est monté sur l'arbre fixe 1. Le deuxième roulement à billes 70 est monté sur une bride de fixation fixe 7 et reçoit une extrémité extérieure de l'arbre tournant 2.

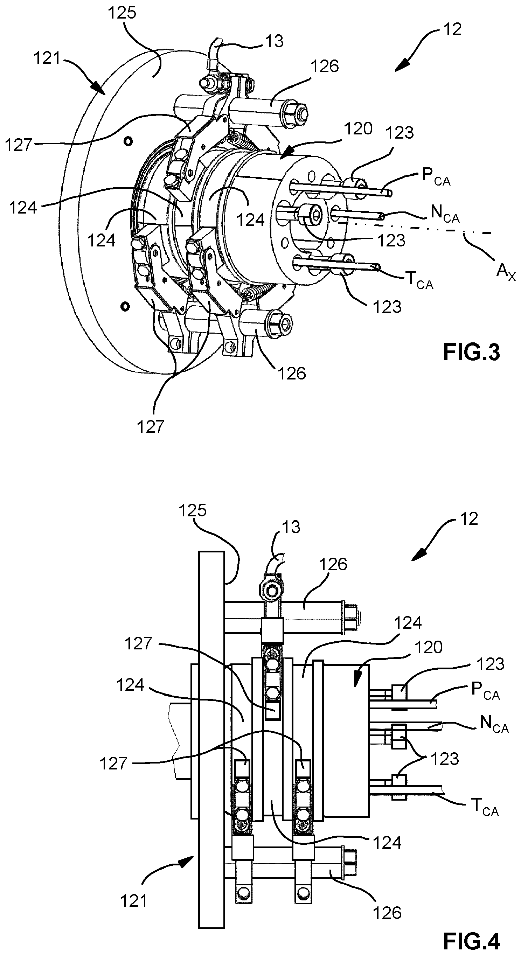

Comme visible aux Figs.2A et 2B, et en référence aussi aux Figs.3 et 4, le collecteur rotatif électrique, référencé 12, comporte une pièce porte-pistes 120 et une pièce porte-balais 121. Le collecteur rotatif 12 assure le maintien des connexions électriques de puissance dans le dispositif EDM, relativement à la rotation de l'arbre tournant 2 et du récepteur d'enroulement de câble 3 autour de l'axe central A_{X}.

La pièce porte-pistes 120 est globalement de forme cylindrique et comporte un alésage central lui permettant un emmanchement sur l'arbre fixe 1, selon l'axe central A_{X}. Des vis 123 sont prévues pour fixer la pièce porte-pistes 120 sur l'arbre fixe 1. La pièce porte-pistes 120 comprend ici trois bagues électriquement conductrices 124 qui forment des pistes de conduction électrique. Typiquement, les bagues 124 sont surmoulées dans un matériau électriquement isolant qui forme le corps de la pièce porte-pistes 120. Les trois bagues 124 sont typiquement en bronze et sont reliées respectivement aux fils électriques de phase P_{CA}, de neutre N_{CA} et de terre T_{CA} du câble d'alimentation électrique CA.

La pièce porte-balais 121 est montée en rotation sur le corps de la pièce porte-pistes 120 et est fixée sur l'arbre tournant 2 par des vis (non représentées).

La pièce porte-balais 121 se présente globalement ici sous la forme d'une rondelle mobile 125 comportant deux axes 126 qui se projettent perpendiculairement depuis une face de celle-ci. Les deux axes 126 sont mécaniquement solidaires de la rondelle mobile 125 et supportent trois porte-balais 127, avec ici deux porte-balais 127 montés sur un même axe 126.

Les porte-balais 127 comportent chacun deux balais de contact électrique, formés typiquement d'un matériau composite à base de graphite, et un mécanisme à ressort poussant les balais contre leur piste 124 respective, de façon à garantir un contact électrique adéquat. Chacun des porte-balais 127 est relié électriquement à un rail de conduction électrique 8 respectif par un fil électrique de connexion 13.

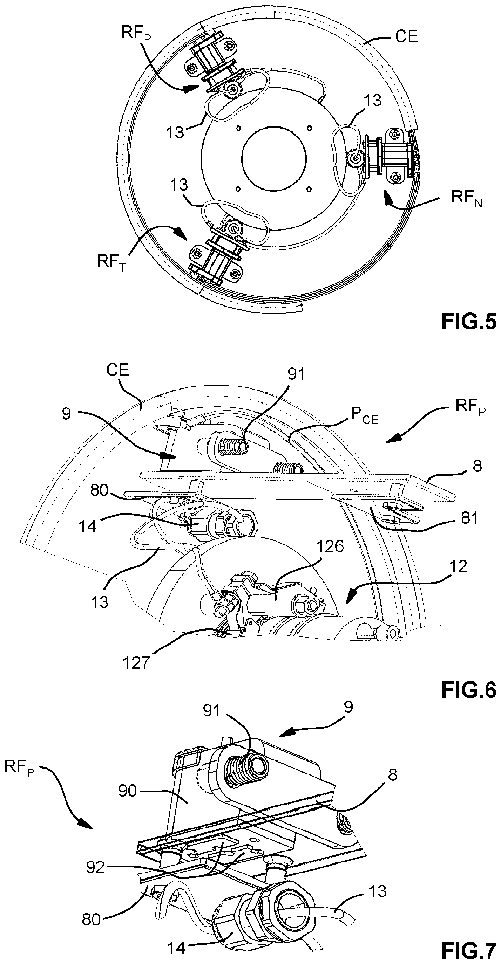

En référence plus particulièrement aux Figs.5 à 7, il est maintenant décrit les ensembles de rail / frotteur électrique. Les ensembles de rail / frotteur électrique assurent le maintien des connexions électriques de puissance dans le dispositif EDM, relativement à la translation selon l'axe X du récepteur d'enroulement de câble 3.

Comme montré à la Fig.5, le dispositif EDM comprend ici trois ensembles de rail / frotteur électrique RF_{P}, RF_{N} et RF_{T}, qui sont similaires et correspondent respectivement aux fils électriques de phase P_{CA}, de neutre N_{CA} et de terre T_{CA} du câble d'alimentation électrique CA. Les ensembles RF_{P}, RF_{N} et R_{F} sont disposés régulièrement en cercle, avec un décalage angulaire de 120 degrés entre eux dans cette forme de réalisation.

Comme bien visible aux Figs.1 et 2A, 2B, les rails 8 sont fixés sur la partie avant de l'arbre tournant 2, sur la paroi circonférentielle de celui-ci, et se prolongent dans l'axe X. Typiquement, les rails 8 sont en bronze, mais pas exclusivement. Les frotteurs 9 sont fixés sur la face annulaire du récepteur d'enroulement de câble 3 et se déplacent avec celui-ci, en conservant un contact électrique avec les rails 8.

Des détails de réalisation de l'ensemble de rail / frotteur électrique RF_{P}, choisi à titre d'exemple pour la description, sont montrés aux Figs.6 et 7.

Le rail 8 est monté sur l'arbre tournant 2 au moyen de plaquettes 80 et 81 et de vis de fixation. Typiquement, afin d'avoir une bonne conductivité électrique, les plaquettes 80 et 81 et les vis de fixation sont en bronze, mais pas exclusivement. La paroi de l'arbre tournant 2 est enserrée entre le rail 8 et les plaquettes 80 et 81. Les plaquettes 80 et 81 sont ici disposées en regard de deux portions d'extrémité du rail 8.

Le fil électrique de connexion 13 est fixé sur la plaquette 80, par une cosse de celui-ci insérée dans une vis de fixation. Un passe-fil 14 est prévu dans la paroi frontale de l'arbre tournant 2 pour le passage du fil électrique de connexion 13. S'agissant ici de l'ensemble de rail / frotteur électrique RF_{P}, le rail 8 est ainsi relié électriquement au fil de phase P_{CA} du câble CA à travers le fil de connexion 13 et le collecteur rotatif 12.

Comme visible à la Fig.7, le frotteur 9 comprend un boîtier 90 qui est fixé par des vis 91 à la paroi du récepteur d'enroulement de câble 3. Le boîtier 90 contient deux blocs-frotteurs 92, formés typiquement d'un matériau composite à base de graphite, et un mécanisme à ressort (non visible) qui pousse les blocs-frotteurs 92 contre le rail 8, pour un contact électrique adéquat avec celui-ci. Le frotteur 9 est relié électriquement au câble électrique CE, plus précisément au fil électrique de phase P_{CE} de ce câble, s'agissant ici de l'ensemble de rail / frotteur électrique RF_{P}.

L'invention ne se limite pas à la forme de réalisation particulière qui a été décrite ici à titre d'exemple. De manière générale, l'invention trouvera des applications dans l'enroulement / déroulement de tous types de câbles ou faisceaux électriques, comme des câbles d'alimentation électrique ou de liaison informatique. L'homme du métier, selon les applications de l'invention, pourra apporter différentes modifications et variantes entrant dans le champ de protection de l'invention.

## Revendications

1. Dispositif motorisé d'enroulement / déroulement d'un câble électrique (CE) comprenant un arbre fixe (1) de fixation à un bâti vertical (BAT), un arbre tournant (2) monté en rotation sur ledit arbre fixe (1) et couplé mécaniquement à un moteur électrique (5), un récepteur d'enroulement de câble électrique (3) monté sur ledit arbre tournant (2) et entraîné en rotation avec celui-ci, lesdits arbre fixe (1), arbre tournant (2) et récepteur d'enroulement de câble électrique (3) ayant un axe central commun (A_{X}) disposé horizontalement lorsque ledit arbre fixe (1) est fixé sur ledit bâti vertical (BAT), des moyens (10, 31) d'entraînement en translation dudit récepteur d'enroulement de câble électrique (3) suivant ledit axe central commun (A_{X}) conjointement à la rotation dudit récepteur d'enroulement de câble électrique (3), et des moyens de connexion électrique (RF_{P}, RF_{N}, RF_{T}, 12) agencés de façon à assurer la continuité de liaisons électriques de puissance entre un câble d'alimentation électrique (CA) et ledit câble électrique (CE) pendant un mouvement combiné de rotation et translation dudit récepteur d'enroulement de câble électrique (3), **caractérisé en ce que** lesdits moyens de connexion électrique comprennent un collecteur rotatif électrique (12) assurant la continuité de liaisons électriques de puissance relativement à la rotation de l'arbre tournant 2 et du récepteur d'enroulement de câble 3 autour de l'axe central A_{X}, et au moins un ensemble de rail / frotteur électrique (RF_{P}, RF_{N}, RF_{T}) assurant la continuité de liaisons électriques de puissance relativement à la translation selon l'axe central A_{X} du récepteur d'enroulement de câble 3.

2. Dispositif selon la revendication 1, **caractérisé en ce qu'**il comprend plusieurs ensembles de rail / frotteur électrique (RF_{P}, RF_{N}, RF_{T}) qui sont disposés régulièrement en cercle autour dudit axe central commun (A_{X}).

3. Dispositif selon la revendication 1 ou 2, **caractérisé en ce que** ledit collecteur rotatif électrique (12) comporte une pièce porte-pistes (120) et une pièce porte-balais (121), ladite pièce porte-pistes (120) étant fixée audit arbre fixe (1) et ayant une pluralité de pistes de conduction électrique (124) et ladite pièce porte-balais (121) étant fixée audit arbre tournant (2) et ayant une pluralité de balais de conduction électrique (127) en contact électrique permanent avec ladite pluralité de pistes de conduction électrique (124).

4. Dispositif selon la revendication 3, **caractérisé en ce que** lesdites pistes de conduction électrique (124) sont en bronze.

5. Dispositif selon l'une quelconque des revendications 1 à 4, **caractérisé en ce que** chaque dit ensemble de rail / frotteur électrique (RF_{P}, RF_{N}, RF_{T}) comporte un rail de conduction électrique (8) fixé sur ledit arbre tournant (2) et se prolongeant parallèlement audit axe central commun (A_{X}) et un frotteur électrique (9) fixé audit récepteur d'enroulement de câble (3) et en contact électrique permanent avec ledit rail de conduction électrique (8).

6. Dispositif selon la revendication 5, **caractérisé en ce que** ledit rail de conduction électrique (8) est en bronze.

7. Dispositif selon l'une quelconque des revendications 1 à 6, **caractérisé en ce que** lesdits moyens de connexion électrique (RF_{P}, RF_{N}, RF_{T}, 12) sont de type monophasé ou triphasé.

8. Système automatique de recharge électrique par induction électromagnétique ayant une bobine primaire mobile, **caractérisé en ce qu'**il comprend un dispositif (EDM) selon l'une quelconque des revendications 1 à 7 pour l'enroulement / déroulement d'un câble électrique (CE) alimentant ledit système.
